# EUROPEAN PATENT APPLICATION

(11) **EP 2 075 313 A1**
(43) Date of publication of application: **01.07.2009**
(21) Application number: 07745350.4
(22) Date of filing: 15.06.2007
(51) Int. Cl.: C09K 11/61, C09K 11/08, C09K 11/59, H01J 29/20, H01J 61/44

(54) **PHOSPHOR**

(30) Priority: 29.06.2006 JP 2006179266; 09.04.2007 JP 2007101553
(71) Applicant: Sumitomo Chemical Company, Limited, Tokyo 104-8260 (JP); National Institute of Advanced Industrial Science and Technology, Tokyo 100-8921 (JP)
(72) Inventor: NAKAMURA, Yoshiko, Tokyo (JP); KUZE, Satoru, Tsukuba-shi, Ibaraki 305-0821 (JP); NISHISU, Yoshihiro, Tsukuba-shi, Ibaraki 305-0053 (JP)
(74) Representative: Lips, Hendrik Jan George
(86) International application number: PCT/JP2007/062095
(87) International publication number: WO 2008/001623

(57) **Abstract**

Disclosed is a phosphor having enhanced luminance. Specifically disclosed is a phosphor **characterized by** being substantially composed of an oxide containing Sr, Ca, Eu, Mg, Si and a halogen element(s) at a molar ratio of a:b:c:d:e:f (wherein a is not less than 0.5 but less than l, b is not less than 0 but less than 0.5, c is more than 0 but less than 0.3, d is not less than 0.8 but not more than 1.2, e is not less than 1.9 but not more than 2.1 and f is not less than 0.0008 but not more than 0.3), which oxide further contains oxygen.

## Description

### Technical Field

The present invention relates to a phosphor.

### Background Art

Phosphors are used for light emitting devices because they emit light upon being excited with an excitation source. The light emitting devices include, for example, electron ray excited light emitting devices in which excitation source for a phosphor is electron ray (e.g., CRT, field emission displays, surface electric field displays, etc.), ultraviolet ray excited light emitting devices in which excitation source for a phosphor is ultraviolet rays (e.g., backlight for liquid crystal displays, three band fluorescent lamps, high load fluorescent lamps, etc.), vacuum ultraviolet ray excited light emitting devices in which excitation source for a phosphor is vacuum ultraviolet rays (e.g., plasma display panels, rare gas lamps, etc.), and white LED in which excitation source for a phosphor is light emitted from blue LED or light emitted from ultraviolet LED, and the like. As conventional phosphors, Patent Document 1 specifically discloses silicate phosphors for vacuum ultraviolet ray excited light emitting devices which comprise an oxide represented by the formula CaMgSi₂O₆:Eu.

Patent Document 1: JP-A-2002-332481 (US6,802,990)

### Disclosure of Invention

### Problem to be solved by the Invention

However, the conventional silicate phosphors represented by CaMgSi₂O₆:Eu are not sufficient in luminance. The object of the present invention is to provide a phosphor having enhanced luminance.

### Means for Solving the Problem

In an attempt to solve the above problems, the inventors have conducted intensive research on silicate phosphors in which a greater part or all of Ca component in the conventional silicate phosphors is replaced with Sr component, and have found that when the above silicate phosphors contain a halogen element(s) in a specific amount, they shown enhanced luminance. Thus, the present invention has been accomplished.

That is, the present invention provides the following inventions.
<1> A phosphor essentially including an oxide which contains Sr, Ca, Eu, Mg, Si and a halogen element(s) at a molar ratio of a:b:c:d:e:f (wherein a is not less than 0.5 and less than 1, b is not less than 0 and less than 0.5, c is more than 0 and less than 0.3, d is not less than 0.8 and not more than 1.2, e is not less than 1.9 and not more than 2.1, and f is not less than 0.0008 and not more than 0.3) and which further contains oxygen.
<2> A phosphor described in the above <1> wherein the halogen element is Cl.
<3> A phosphor described in the above <1> wherein the halogen element is F.
<4> A phosphor described in the above <1> wherein the halogen elements are Cl and F.
<5> A phosphor described in any one of the above <1>-<4> wherein f is not less than 0.005 and not more than 0.2.
<6> A phosphor described in any one of the above <1>-<5> wherein b is not less than 0 and not more than 0.01.
<7> A phosphor described in any one of the above <1>-<6> wherein the oxide has a pyroxene type crystal structure.
<8> A process for producing the phosphor of the above <2> by firing a mixture of metallic compounds wherein the mixture of metallic compounds contains Sr, Ca, Eu, Mg and Si at a molar ratio of a:b:c:d:e in which a is not less than 0.5 and less than 1, b is not less than 0 and less than 0.5, c is more than 0 and less than 0.3, d is not less than 0.8 and not more than 1.2, and e is not less than 1.9 and not more than 2.1, and the mixture of metallic compounds contains SrCl₂.
<9> A process for producing the phosphor of the above <3> by firing a mixture of metallic compounds wherein the mixture of metallic compounds contains Sr, Ca, Eu, Mg and Si at a molar ratio of a:b:c:d:e in which a is not less than 0.5 and less than 1, b is not less than 0 and less than 0.5, c is more than 0 and less than 0.3, d is not less than 0.8 and not more than 1.2, and e is not less than 1.9 and not more than 2.1, and the mixture of metallic compounds contains EuF₃.
<10> A process for producing the phosphor of the above <4> by firing a mixture of metallic compounds wherein the mixture of metallic compounds contains Sr, Ca, Eu, Mg and Si at a molar ratio of a:b:c:d:e in which a is not less than 0.5 and less than 1, b is not less than 0 and less than 0.5, c is more than 0 and less than 0.3, d is not less than 0.8 and not more than 1.2, and e is not less than 1.9 and not more than 2.1, and the mixture of metallic compounds contains SrCl₂ and EuF₃.
<11> A process for producing the phosphor described in any one of the above <8>-<10> by firing the mixture of metallic compounds which comprises firing the mixture of metallic compounds and thereafter contacting the resultant with an acid.
<12> A phosphor paste which contains the phosphor described in any one of the above <1>-<7>.
<13> A phosphor layer obtained by coating the phosphor paste described in the above <12> on a substrate and then heat treating the coat.
<14> A light emitting device which has the phosphor described in any one of the above <1>-<7>.

### Advantages of the Invention

The phosphor provided by the present invention has enhanced luminance and is especially suitable for ultraviolet ray excited light emitting devices such as backlight for liquid crystal displays, three band fluorescent lamps and high load fluorescent lamps, and besides can also be used for vacuum ultraviolet excited light emitting devices such as plasma display panels and rare gas lamps, electron ray excited light emitting devices such as field emission displays, and light emitting devices such as white LED, and hence the phosphor of the present invention is industrially very useful.

### Best Mode for Carrying Out the Invention

The present invention will be explained in detail below.
The phosphor of the present invention is **characterized in that** it essentially includes an oxide which contains Sr, Ca, Eu, Mg, Si and a halogen element(s) at a molar ratio of a:b:c:d:e:f (wherein a is not less than 0.5 and less than 1, b is not less than 0 and less than 0.5, c is more than 0 and less than 0.3, d is not less than 0.8 and not more than 1.2, e is not less than 1.9 and not more than 2.1, and f is not less than 0.0008 and not more than 0.3) and which further contains oxygen. Since the phosphor of the present invention essentially includes the above oxide, it shows enhanced luminance. If the above a, b, c, d, e and f are outside the above ranges, the phosphor is not sufficient in luminance, which is not preferred.

As the halogen elements, mention may be made of F, Cl, Br and I, and the halogen element(s) is (are) preferably Cl and/or F for attaining further enhanced luminance, and the halogen element preferably contains at least Cl. When the halogen elements are Cl and F, the content in total satisfies the range of f.

In the present invention, when f is not less than 0.005 and not more than 0.2, the phosphor of the present invention has further enhanced luminance, which is preferred. Moreover, when b is not less than 0 and not more than 0.01, the phosphor of the present invention has further enhanced luminance, which is preferred.

In the present invention, when the oxide has a pyroxene type crystal structure, the phosphor has further enhanced luminance and is excellent in deterioration resistance, which is preferred.

Moreover, the phosphor of the present invention may further contain at least one element selected from the group consisting of Al, Sc, Y, La, Gd, Ce, Pr, Nd, Sm, Tb, Dy, Ho, Er, Tm, Yb, Lu, Bi and Mn so long as the effect of the present invention is not damaged. Content of these element(s) is usually not less than 100 ppm and not more than 50000 ppm based on the total weight of the phosphor.

Next, the process for producing the phosphor of the present invention will be explained.
The phosphor of the present invention can be produced by firing a mixture of metallic compounds which is converted into the phosphor of the present invention by firing. That is, it can be produced by weighing and mixing the compounds containing the corresponding metallic elements so as to give a given composition, and then firing the resulting mixture of metallic compounds. That is, the mixture of metallic compounds contains Sr, Ca, Eu, Mg and Si at a molar ratio of a:b:c:d:e (wherein a is not less than 0.5 and less than 1, b is not less than 0 and less than 0.5, c is more than 0 and less than 0.3, d is not less than 0.8 and not more than 1.2, e is not less than 1.9 and not more than 2.1) and the mixture of the metallic compounds contains a halogen element(s). For example, a phosphor which comprises an oxide containing Sr, Eu, Mg, Si and Cl as a halogen element at a molar ratio of 0.98:0.02:1:2:0.12 and further containing oxygen, which is one of preferred compositions, can be produced by weighing and mixing SrCl₂, Eu₂O₃, MgCO₃ and SiO₂ so as to give a molar ratio of Sr:Eu:Mg:Si of 0.98:0.02:1:2, and then firing the resulting mixture. Here, the content of Cl which is a halogen element can be controlled by controlling firing time and firing temperature which will be referred to hereinafter.

The compounds containing the above metallic elements include compounds of strontium, calcium, magnesium, silicon or europium, and, there may be used, for example, oxides thereof or compounds such as hydroxides, carbonates, nitrates, halides and oxalates which can be converted to oxides upon decomposition at high temperatures.

In order to have the phosphor of the present invention contain a halogen element, in case halogen element be Cl, there may be used a chloride such as SrCl₂ or EuCl₃ as one of the compounds containing the corresponding metallic elements or when such chloride is not used as the compound containing the corresponding metallic elements, ammonium chloride is used. Even in the case of using such chloride, ammonium chloride may further be used. Among them, when SrCl₂ is used and the mixture of metallic compounds contains SrCl₂, an oxide of high crystallinity is obtained, resulting in a phosphor of enhanced luminance, which is preferred. In case of the halogen element in the present invention being F, there may be used a fluoride such as SrF₂ or EuF₃ as one of the compounds containing the corresponding metallic elements or when such fluoride is not used as the compound containing the corresponding metallic elements, ammonium fluoride may be used. As above, even in the case of using such fluoride, ammonium fluoride may further be used. In the case of the halogen elements in the present invention being Cl and F, for example, the mixture of metallic compounds may contain SrCl₂ and EuF₃.

For mixing the compounds containing the above metallic elements, there may be employed conventional apparatuses such as ball mill, V shaped mixer and stirrer. When ammonium chloride or ammonium fluoride is used, it may be added at the time of mixing.

The phosphor of the present invention is obtained by firing the mixture of metallic compounds, for example, at a temperature in the range of 900-1500°C, usually for not less than 0.3 hour and not more than 100 hours. Here, content of the halogen element(s) in the resulting phosphor can be controlled by controlling the firing time and firing temperature. The content of the halogen element(s) in the phosphor tends to decrease with increase of the firing time and with increase of the firing temperature, and suitable firing time and firing temperature can be experimentally determined.

When compounds capable of being decomposed and/or oxidized at high temperatures, such as hydroxide, carbonate, nitrate, halide and oxalate, are used in the mixture of metallic compounds, it is also possible to keep the mixture at a temperature of 400-900°C to calcine it to form an oxide or to carry out the above-mentioned firing after removing water of crystallization. The atmosphere in which the calcination is effected may be any of inert gas atmosphere, oxidizing atmosphere and reducing atmosphere. After calcinations, the product may be ground.

The atmosphere for firing is preferably an inert gas atmosphere such as nitrogen or argon; an oxidizing atmosphere such as air, oxygen, oxygen-containing nitrogen or oxygen-containing argon; or a reducing atmosphere such as hydrogen-containing nitrogen containing 0.1-10 volume% of hydrogen or hydrogen-containing argon containing 0.1-10 volume% of hydrogen. When firing is carried out in a strong reducing atmosphere, a suitable amount of carbon may be contained in the mixture of metallic compounds, and then the mixture may be fired.

The phosphor obtained by the above process can be ground using a ball mill or a jet mill, and the grinding and the firing may be repeated twice or more. If necessary, the resulting phosphor can be washed or classified. In some case, the content of the halogen element(s) can be controlled by the washing. In the case of carrying out the operation which causes variation in content of the halogen element(s) after washing, phosphors in which the content after variation satisfy the molar ratio mentioned above are considered to be included in the phosphors of the present invention. According to the finding of the inventors, the amount of the halogen element(s) in the phosphor after firing would decrease by the operations such as washing, but thereafter the amount hardly varies and becomes stable.

Specifically, the washing includes contacting the fired product obtained after firing the mixture of metallic compounds with an acid, and in this case, the resulting phosphor sometimes has further enhanced luminance, which is preferred. Moreover, by contacting the fired product with acid, the luminance at 100°C sometimes increases, and temperature characteristics of the phosphor is sometimes improved. The methods of contacting the fired product with acid include a method of immersing the fired product in an acid, a method of immersing the fired product in an acid with carrying out agitation, and a method of mixing the fired product with an acid by a wet ball mill, and preferred is the method of immersing the fired product in an acid with carrying out agitation.

Specific examples of the acid are organic acids such as acetic acid and oxalic acid or inorganic acids such as hydrochloric acid, nitric acid and sulfuric acid, and hydrochloric acid, nitric acid and sulfuric acid are preferred, and hydrochloric acid is particularly preferred. The hydrogen ion concentration of the acid is preferably about 0.001 mol/L to about 2 mols/L from the point of handling. The temperature of the acid in contacting with the fired product may be room temperature (about 25°C), and if necessary, the acid may be heated to about 30°C to about 80°C. The time for which the fired product and the acid are contacted is usually about 1 second to about 10 hours.

Usually, after contacting the fired product with acid, solid-liquid separation and drying are conducted. The solid-liquid separation can be carried out by industrially usually employed methods such as filtration, suction filtration, filtration under pressure, centrifugal separation and decantation. The drying can be carried out by industrially usually employed apparatuses such as vacuum dryer, hot-air heating dryer, conical dryer and rotary evaporator. Furthermore, the solid obtained after solid-liquid separation may be again subjected to solid-liquid separation by contacting with water (e.g., ion exchanged water).

Next, a phosphor paste containing the phosphor of the present invention will be explained.
The phosphor paste of the present invention contains the phosphor of the present invention as a main component and organic materials as other components. The organic materials include, for example, solvents and binders. The phosphor paste of the present invention can be used in the same manner as in production of conventional light emitting devices, and by heat treating the paste, organic materials in the phosphor paste are removed by volatilization, burning or decomposition, whereby a phosphor layer essentially including the phosphor of the present invention can be obtained.

The phosphor paste of the present invention can be produced by known method disclosed, for example, in JP-A-10-255671. It can be obtained, for example, by mixing the phosphor of the present invention with a binder and a solvent using a ball mill, a three-roll, or the like, and the mixing ratio is optionally set.

As the binders, mention may be made of, for example, cellulose resins (e.g., ethyl cellulose, methyl cellulose, nitro cellulose, acetyl cellulose, cellulose propionate, hydroxypropyl cellulose, butyl cellulose, benzyl cellulose and modified cellulose), acrylic resins (e.g., polymers of at least one of the monomers such as acrylic acid, methacrylic acid, methyl acrylate, methyl methacrylate, ethyl acrylate, ethyl methacrylate, propyl acrylate, propyl methacrylate, isopropyl acrylate, isopropyl methacrylate, n-butyl acrylate, n-butyl methacrylate, tert-butyl acrylate, tert-butyl methacrylate, 2-hydroxyethyl acrylate, 2-hydroxyethyl methacrylate, 2-hydroxypropyl acrylate, 2-hydroxypropyl methacrylate, benzyl acrylate, benzyl methacrylate, phenoxy acrylate, phenoxy methacrylate, isobornyl acrylate, isobornyl methacrylate, glycidyl methacrylate, styrene, α-methylstyreneacrylamide, methacrylamide, acrylonitrile, and methacrylonitrile), ethylene-vinyl acetate copolymer resins, polyvinyl butyral, polyvinyl alcohol, propylene glycol, polyethylene oxide, urethane resins, melamine resins, phenolic resins, etc.

As the solvents, mention may be made of, for example, monohydric alcohols having high boiling points; polyhydric alcohols, e.g., diols and triols such as ethylene glycol and glycerin; compounds obtained by etherification and/or esterification of alcohols (e.g., ethylene glycol monoalkyl ethers, ethylene glycol dialkyl ethers, ethylene glycol alkyl ether acetates, diethylene glycol monoalkyl ether acetates, diethylene glycol dialkyl ethers, propylene glycol monoalkyl ethers, propylene glycol dialkyl ethers, and propylene glycol alkylacetates), etc.

The phosphor layer obtained by coating the phosphor paste prepared as above on a substrate and then heat treating the coat is excellent in moisture resistance. The material of the substrate includes, for example, glass, resin, etc., and may be flexible and may be in the shape of plate or container. Furthermore, the phosphor paste can be coated by screen printing method, ink jet method, etc. The heat treating temperature is usually 300-600°C. Moreover, after coating on the substrate, the coat may be dried at a temperature of room temperature to 300°C before carrying out the heat treatment.

Here, a three band fluorescent lamp which is an ultraviolet ray excited light emitting device is taken as an example of light emitting devices having the phosphor of the present invention, and a method for producing it will be explained. For producing a three band fluorescent lamp, there may be used known method as disclosed, for example, in JP-A-2004-2569. That is, a three band emitting type phosphor obtained by mixing suitably a blue light emitting phosphor, a green light emitting phosphor and a red light emitting phosphor so that color of emitted light becomes desired white, is dispersed, for example, in an aqueous polyethylene oxide solution to prepare a phosphor coating solution. This coating solution is coated on inner surface of a glass bulb, followed by baking at a temperature of, for example, 400-900°C to form a phosphor film.
Thereafter, usual steps of sealing of stem to end portions of the glass bulb, exhaustion of the bulb, charging of mercury and rare gas, sealing glass bulb, fitting of a base, etc. are carried out, whereby a three band fluorescent lamp can be produced.

The above red light emitting phosphors include, for example, trivalent europium-activated yttrium oxide phosphor (Y₂O₃:Eu), trivalent europium-activated yttrium oxysulfide phosphor (Y₂O₂S:Eu), etc., and the green light emitting phosphors include, for example, cerium, terbium-activated lanthanum phosphate (LaPO₄:Ce,Tb), terbium-activated cerium· terbium· magnesium· aluminum phosphor ((CeTb)MgAl₁₁O₁₉:Tb), etc. As the blue light emitting phosphors, there may be used the phosphor of the present invention alone or a mixture of the phosphor of the present invention with other blue light emitting phosphor. In this case, examples of the other blue light emitting phosphor are europium-activated strontium phosphate phosphor (Sr₅(PO₄)₃Cl:Eu), europium-activated strontium· barium· calcium phosphate phosphor ((Sr,Ca,Ba)₅(PO₄)₃Cl:Eu), europium-activated barium· magnesium· aluminate phosphor (BaMg₂Al₁₆O₂₇:Eu, BaMgAl₁₀O₁₇:Eu, etc.), and the like.

Next, a plasma display panel which is a vacuum ultraviolet ray excited light emitting device is taken as an example of light emitting device having the phosphor of the present invention and a method for producing it will be explained. For producing a plasma display panel, there may be used a known method as disclosed, for example, in JP-A-10-195428 (US6,099,753). That is, in case the phosphor of the present invention shows blue light emission, the respective phosphors comprising green light emitting phosphor, red light emitting phosphor and the blue light emitting phosphor of the present invention are respectively mixed with a binder comprising, for example, a cellulose resin or polyvinyl alcohol and a solvent to prepare phosphor pastes. A substrate surface formed in a stripe shape and partitioned by partition walls on the inner face of a rear face substrate and having an address electrode, and partition wall faces are coated with this paste by a method such as screen printing and are heat treated at 300-600°C so that respective phosphor layers are formed. The respective phosphor layers are then overlapped with a surface glass substrate in which a transparent electrode and a bus electrode are arranged in a direction perpendicular to each of the phosphor layers and a dielectric layer and a protecting layer are arranged on an inner face of this surface glass substrate. The respective phosphor layers and the surface glass substrate are then adhered to each other. A discharging space is formed by exhausting the inside and charging therein rare gas such as Xe or Ne so that a plasma display panel is manufactured.

Next, taking a field emission display which is an electron ray excited light emission device as an example of the light emitting device having the phosphor of the present invention, a method for producing the field emission display will be explained. For producing a field emission display, there may be employed a known method as disclosed in JP-A-2002-138279. That is, in case the phosphor of the present invention shows blue light emission, phosphors comprising respectively a green light emitting phosphor, a red light emitting phosphor and the blue light emitting phosphor of the present invention are respectively dispersed, for example, in aqueous polyvinyl alcohol solutions to prepare phosphor pastes. The phosphor pastes are coated on a glass substrate and then heat treated to form phosphor layers to obtain a face plate. The face plate and a rear plate having many electron emitting devices are fabricated using a supporting frame between them, and simultaneously usual steps such as hermetic sealing while vacuum exhausting the spaces between the plates are carried out, whereby a field emission display can be produced.

Next, white LED is taken as an example of the light emitting device of the present invention, and a method for producing it will be explained. For producing the white LED, there may be used known methods as disclosed, for example, in JP-A-5-152609 and JP-A-7-99345. That is, a phosphor containing at least the phosphor of the present invention is dispersed in a light transmitting resin such as epoxy resin, polycarbonate or silicone rubber, and the resin in which the phosphor is dispersed is molded so that the resin surrounds blue LED or ultraviolet LED, and thus a white LED can be produced.

### Examples

The present invention will be explained in more detail below.

Measurement of luminance (A) was conducted at room temperature (25°C) using a spectrophotometer (model FP-6500 manufactured by JASCO Corporation). Measurement of luminance (B) was conducted on emission obtained by irradiating the phosphor with vacuum ultraviolet rays by an excimer 146 nm lamp (model H0012 manufactured by Ushio Inc.) in a vacuum tank of 6.7 Pa(5×10⁻² Torr) or lower using a spectroradiometer (SR-3 manufactured by Topcon Corporation). Furthermore, the phosphor was dissolved in pyrophosphoric acid, followed by subjecting to steam distillation, and then Cl content and F content were measured using an ion chromatograph (DX-120 manufactured by Dionex Corporation).

### Comparative Example 1

As starting materials, strontium carbonate (SrCO₃, product name: SW-K manufactured by Sakai Chemical Industry Co., Ltd.), europium oxide (Eu₂O₃ manufactured by Shin-Etsu Chemical Co., Ltd.), magnesium carbonate (MgO content: 42.0%, product name: High Purity Magnesium Carbonate manufactured by Kyowa Chemical Industry Co., Ltd.), and silicon dioxide (SiO₂, trade name: AEROSIL 200 manufactured by Japan Aerosil Co., Ltd.) were weighed so as to give a molar ratio of Sr:Eu:Mg:Si of 0.98:0.02:1:2, and they were mixed. The mixture was calcined at 900°C for 2 hours in the air, and fired by keeping it at 1100°C for 2 hours in an N₂ atmosphere containing 2 vol% of H₂. The firing was carried out thrice to obtain phosphor 1. Cl content of phosphor 1 was measured to find that phosphor 1 contained 50 ppm of Cl and phosphor 1 had a molar ratio of Sr:Eu:Mg:Si:Cl of 0.98:0.02:1:2:4×10⁻⁴. It is considered that the Cl was contained as impurity in each starting material.

When phosphor 1 was excited with ultraviolet rays of 254 nm in wavelength, it showed blue light emission, and the luminance (A) in this case is assumed to be 100.

When phosphor 1 was excited with vacuum ultraviolet rays of 146 nm in wavelength at room temperature (25°C), it showed blue light emission, and the peak emission wavelength was 436 nm. The luminance (B) in this case is assumed to be 100.

### Example 1

As starting materials, strontium chloride (SrCl₂· 6H₂O manufactured by Sakai Chemical Industry Co., Ltd.), europium chloride (EuCl₃· 6H₂O manufactured by Wako Pure Chemical Industries Ltd.), magnesium carbonate (MgO content: 42.0%, product name: high purity magnesium carbonate manufactured by Kyowa Chemical Industry Co., Ltd.), and silicon dioxide (SiO₂, trade name: AEROSIL 200 manufactured by Japan Aerosil Co., Ltd.) were weighed so as to give a molar ratio of Sr:Eu:Mg:Si of 0.98:0.02:1:2, and they were mixed. The mixture was calcined at 800°C for 2 hours in the air, and fired by keeping it at 1100°C for 2 hours in an N₂ atmosphere containing 2 vol% of H₂. The firing was carried out thrice to obtain phosphor 2. The Cl content of phosphor 2 was measured to find that phosphor 2 contained 1.6×10⁴ ppm of Cl and phosphor 2 had a molar ratio of Sr:Eu:Mg:Si:Cl of 0.98:0.02:1:2:0.12.

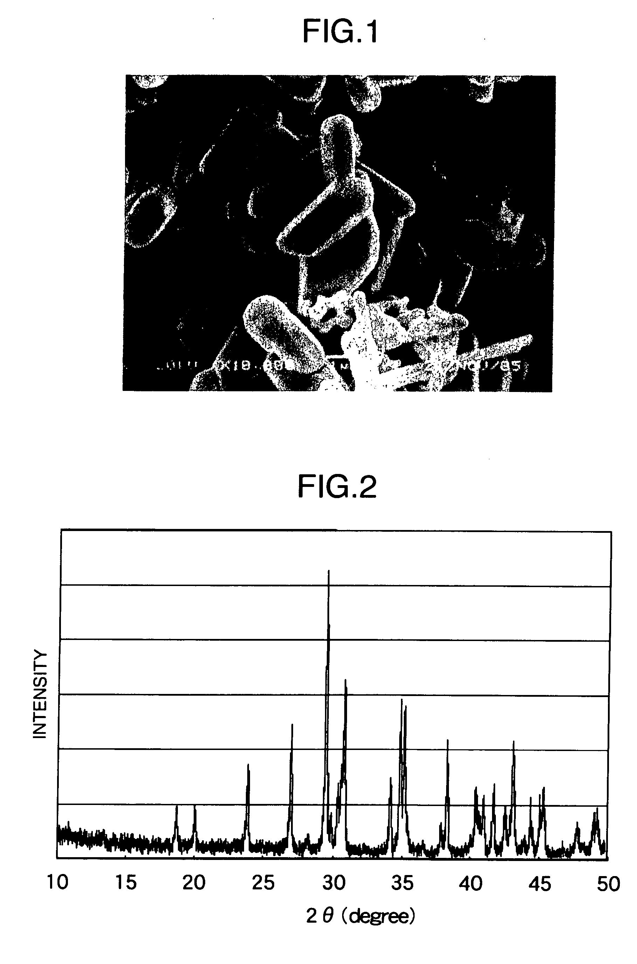

When phosphor 2 was excited with ultraviolet rays of 254 nm in wavelength, it showed blue light emission, and luminance (A) of the phosphor 2 was 214 when luminance (A) of the phosphor 1 was assumed to be 100. An SEM photograph of the phosphor 2 is shown in FIG. 1. Furthermore, the phosphor 2 was filled in a substrate used for powder X-ray diffraction measurement and was subjected to powder X-ray diffraction measurement at a diffraction angle 2θ of 10°- 50°using CuKα line source by a powder X-ray diffraction apparatus (model RINT2500TTR manufactured by Rigaku Corporation). The resulting powder X-ray diffraction pattern is shown in FIG. 2. It was seen from FIG. 2 that the phosphor 2 had a pyroxene type crystal structure.

### Example 2

The phosphor 2 was washed with water and dried to obtain phosphor 3. The Cl content of phosphor 3 was measured to find that phosphor 3 contained 7×10² ppm of Cl and phosphor 3 had a molar ratio of Sr:Eu:Mg:Si:Cl of 0.98:0.02:1:2:0.005. When phosphor 3 was excited with ultraviolet rays of 254 nm in wavelength, it showed blue light emission, and luminance (A) of the phosphor 3 was 214 when luminance (A) of the phosphor 1 was assumed to be 100.

### Example 3

As starting materials, strontium chloride (SrCl₂· 6H₂O manufactured by Sakai Chemical Industry Co., Ltd.), europium fluoride (EuF₃ manufactured by Wako Pure Chemical Industries Ltd.), magnesium carbonate (MgO content: 42.0%, product name: high purity magnesium carbonate manufactured by Kyowa Chemical Industry Co., Ltd.), and silicon dioxide (SiO₂, trade name: AEROSIL 200 manufactured by Japan Aerosil Co., Ltd.) were weighed so as to give a molar ratio of Sr:Eu:Mg:Si of 0.98:0.02:1:2, and they were mixed. The mixture was calcined at 800°C for 2 hours in the air, and furthermore fired by keeping it at 1100°C for 2 hours in an N₂ atmosphere containing 2 vol% of H₂. The firing was carried out thrice to obtain phosphor 4. The F and Cl contents of phosphor 4 were measured to find that phosphor 4 contained 2.3×10⁴ ppm of Cl and 1.7×10³ ppm of F, and phosphor 2 had a molar ratio of Sr:Eu:Mg:Si:Cl:F of 0.98:0.02:1:2:0.17:0.03. It was also found by X-ray diffraction measurement that phosphor 4 had a pyroxene type crystal structure. When phosphor 4 was excited with ultraviolet rays of 254 nm in wavelength, it showed blue light emission, and luminance (A) of the phosphor 4 was 224 when luminance (A) of the phosphor 1 was assumed to be 100.

### Example 4

The phosphor 4 was washed with water and dried to obtain phosphor 5. The Cl and F contents of phosphor 5 were measured to find that the phosphor 5 contained 7×10² ppm of Cl and 1×10³ ppm of F, and the phosphor 5 had a molar ratio of Sr:Eu:Mg:Si:Cl:F of 0.98:0.02:1:2:0.005:0.016. When phosphor 5 was excited with ultraviolet rays of 254 nm in wavelength, it showed blue light emission, and luminance (A) of the phosphor 5 was 224 when luminance (A) of the phosphor 1 was assumed to be 100.

### Example 5

The phosphor 4 (1 g) was immersed in hydrochloric acid (50 ml) having a hydrogen ion concentration of 0.1 mol/l to contact the phosphor with hydrochloric acid, followed by stirring for 3 minutes by a magnetic stirrer, then carrying out solid-liquid separation by suction filtration, contacting with water, and again carrying out solid-liquid separation. Then, in a condition of 0.1 MPa the product was subjected to drying under a reduced pressure at 100°C to obtain phosphor 6. The Cl and F contents of phosphor 6 were measured to find that the phosphor 6 contained 1.1×10³ ppm of Cl and 3.2×10 ppm of F, and the phosphor 6 had a molar ratio of Sr:Eu:Mg:Si:Cl:F of 0.98:0.02:1:2:0.008:0.0004. When phosphor 6 was excited with ultraviolet rays of 254 nm in wavelength, it showed blue light emission, and luminance (A) of the phosphor 6 was 218 when luminance (A) of the phosphor 1 was assumed to be 100.

When phosphor 6 was excited with vacuum ultraviolet rays of 146 nm in wavelength at room temperature (25°C), it showed blue light emission, and the peak emission wavelength was 436 nm. The luminance (B) of the phosphor 6 in this case was 128 when luminance (B) of the phosphor 1 was assumed to be 100.

When phosphor 6 was excited with vacuum ultraviolet rays of 146 nm in wavelength at 100°C, it showed blue light emission, and the peak emission wavelength was 436 nm. The luminance (B) in this case was 116 when luminance (B) of the phosphor 1 was assumed to be 100.

### Comparative Example 2

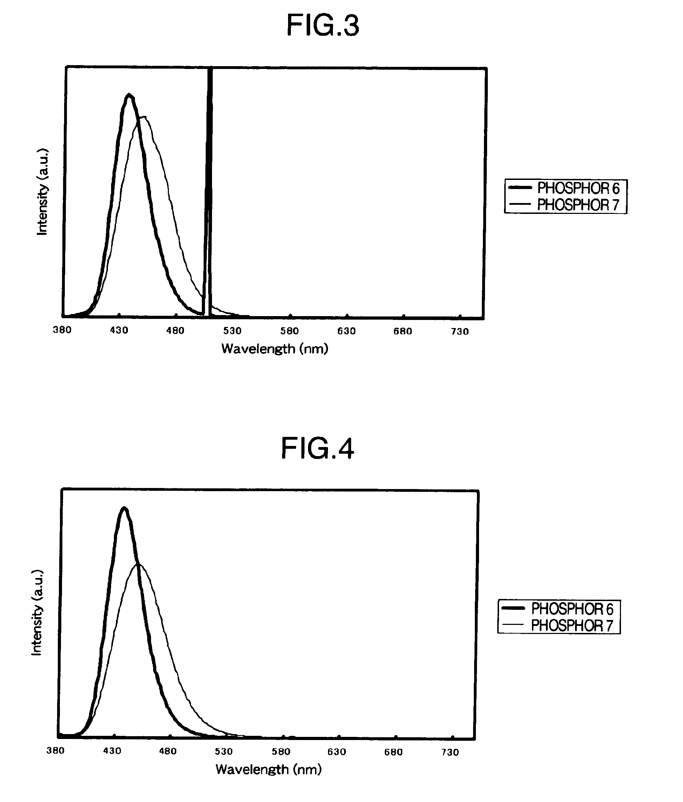

As starting materials, barium carbonate (BaCO₃ manufactured by Nippon Chemical Industrial Co., Ltd.), europium oxide (Eu₂O₃ manufactured by Shin-Etsu Chemical Co., Ltd.), magnesium carbonate (MgO content: 42.0%, product name: high purity magnesium carbonate manufactured by Kyowa Chemical Industry Co., Ltd.), and aluminum oxide (Al₂O₃, trade name: SUMICORUNDUM manufactured by Sumitomo Chemical Co., Ltd.) were weighed so as to give a molar ratio of Ba:Eu:Mg:Al of 0.9:0.1:1:10, and they were mixed. The mixture was fired by keeping it at 1450°C for 5 hours in an N₂ atmosphere containing 2 vol% of H₂ to obtain phosphor 7 (BaMgAl₁₀O₁₇:Eu).
Phosphor 6 of Example 5 and phosphor 7 of Comparative Example 2 were respectively excited with ultraviolet rays of 254 nm in wavelength, and the emissions obtained were subjected to spectrometry (range of spectrometry: 380 nm - 750 nm), and the resulting emission spectrum is shown in FIG. 3. The peak around 508 nm was a peak originating from the ultraviolet rays of 254 nm in wavelength.
Furthermore, phosphor 6 of Example 5 and phosphor 7 of Comparative Example 2 were respectively excited with vacuum ultraviolet rays of 146 nm in wavelength at room temperature (25°C), and the emissions obtained were subjected to spectrometry (range of spectrometry: 380 nm - 750 nm), and the resulting emission spectrum is shown in FIG. 4.
As is clear from FIG. 3 and FIG. 4, the phosphor of the present invention showed superior luminance as compared with conventional phosphor (BaMgAl₁₀O₁₇:Eu, BAM).

### Industrial Applicability

The phosphor provided by the present invention has enhanced luminance and is especially suitable for ultraviolet ray excited light emitting devices such as backlight for liquid crystal displays, three band fluorescent lamps and high load fluorescent lamps, and besides can also be used for vacuum ultraviolet excited light emitting devices such as plasma display panels and rare gas lamps, electron ray excited light emitting devices such as field emission displays, and light emitting devices such as white LED, and hence the phosphor of the present invention is industrially very useful.

### Brief Description of Drawings

[FIG. 1] An SEM photograph of phosphor 2 (10000× magnification)
[FIG. 2] Powder X-ray diffraction pattern obtained by powder X-ray diffraction measurement of phosphor 2 and obtained when the diffraction angle 28 was 10° - 50°.
[FIG. 3] Emission spectrum patterns of phosphor 6 and phosphor 7.
[FIG. 4] Emission spectrum patterns of phosphor 6 and phosphor 7.

## Claims

1. A phosphor essentially including an oxide which contains Sr, Ca, Eu, Mg, Si and a halogen element(s) at a molar ratio of a:b:c:d:e:f wherein a is not less than 0.5 and less than 1, b is not less than 0 and less than 0.5, c is more than 0 and less than 0.3, d is not less than 0.8 and not more than 1.2, e is not less than 1.9 and not more than 2.1, and f is not less than 0.0008 and not more than 0.3 and which further contains oxygen.

2. A phosphor according to claim 1 wherein the halogen element is Cl.

3. A phosphor according to claim 1 wherein the halogen element is F.

4. A phosphor according to claim 1 wherein the halogen elements are Cl and F.

5. A phosphor according to any one of claims 1-4 wherein f is not less than 0.005 and not more than 0.2.

6. A phosphor according to any one of claims 1-5 wherein b is not less than 0 and not more than 0.01.

7. A phosphor according to any one of claims 1-6 wherein the oxide has a pyroxene type crystal structure.

8. A process for producing the phosphor of claim 2 by firing a mixture of metallic compounds wherein the mixture of metallic compounds contains Sr, Ca, Eu, Mg and Si at a molar ratio of a:b:c:d:e in which a is not less than 0.5 and less than 1, b is not less than 0 and less than 0.5, c is more than 0 and less than 0.3, d is not less than 0.8 and not more than 1.2, and e is not less than 1.9 and not more than 2.1, and the mixture of metallic compounds contains SrCl₂.

9. A process for producing the phosphor of claim 3 by firing a mixture of metallic compounds wherein the mixture of metallic compounds contains Sr, Ca, Eu, Mg and Si at a molar ratio of a:b:c:d:e in which a is not less than 0.5 and less than 1, b is not less than 0 and less than 0.5, c is more than 0 and less than 0.3, d is not less than 0.8 and not more than 1.2, and e is not less than 1.9 and not more than 2.1, and the mixture of metallic compounds contains EuF₃.

10. A process for producing the phosphor of claim 4 by firing a mixture of metallic compounds wherein the mixture of metallic compounds contains Sr, Ca, Eu, Mg and Si at a molar ratio of a:b:c:d:e in which a is not less than 0.5 and less than 1, b is not less than 0 and less than 0.5, c is more than 0 and less than 0.3, d is not less than 0.8 and not more than 1.2, and e is not less than 1.9 and not more than 2.1, and the mixture of metallic compounds contains SrCl₂ and EuF₃.

11. A process for producing the phosphor according to any one of claims 8-10 by firing a mixture of metallic compounds which comprises firing the mixture of metallic compounds and thereafter contacting the resultant with an acid.

12. A phosphor paste which contains the phosphor of any one of claims 1-7.

13. A phosphor layer obtained by coating the phosphor paste of claim 12 on a substrate and then heat treating the coat.

14. A light emitting device which has the phosphor of any one of claims 1-7.
